# EUROPEAN PATENT SPECIFICATION

(11) **EP 2 679 659 B1**
(45) Date of publication and mention of the grant of the patent: **24.08.2016**
(21) Application number: 12174397.5
(22) Date of filing: 29.06.2012
(51) Int. Cl.: B01D 53/22, C01B 3/24, C01B 3/34, C10J 3/66, C10K 1/06, C10K 1/10, C10B 27/00, C10B 53/00, C10B 53/02, C10B 53/07, C10B 57/02, F23G 5/04, F23G 7/12, C10J 3/72, C10K 1/00, F23G 5/027, F23G 5/46, F23G 5/50, F23G 7/10, C10J 3/62

(54) **Method and plant for production of a fuel gas from waste**
Verfahren und Anlage für die Herstellung von Kraftstoffgas aus Abfall
Procédé et installation pour la production d'un gaz combustible à partir de déchets

(43) Date of publication of application: 01.01.2014
(73) Proprietor: Global Gateways Lux HoldCo S.A., 2163 Luxembourg (LU)
(72) Inventor: Jacobsen, Jorn, 29603 Marbella (ES)
(74) Representative: Protector IP Consultants AS

(56) References cited:
- EP-A1- 2 322 781
- WO-A1-01/68789
- US-A1- 2007 082 306
- US-A1- 2009 084 666

## Description

### Technical Field

The present invention relates to handling of waste, more specifically waste mainly of organic origin such as biomass, municipal solid waste (MSW), plastic, rubber and the like. More specifically, the present invention relates to improvements in the conversion of said waste into a useful energy source, such as electrical power, or fuel.

### Background Art

Domestic waste is a mixture materials, and comprises all from food, both covering food of animal and plant origin, paper and other products made of plant fibres, such as fabric, building material, both comprising wood and wood based products, plastic and concrete, natural and synthetic polymer materials, such as plastics of different kinds, rubber, synthetic rubber, metals, etc.

Traditionally, domestic waste and industry waste have been filled into landfills. Landfills take up valuable space, and create an aesthetical problem both with regard to the "visual pollution", and the smell associated with the waste. An additional problem with landfills is poisonous and environmentally unacceptable compounds in gaseous form, or liquids or solids that are solubilised in liquids in the landfill. Gases released from the waste in a landfill may, in addition to result in unwanted smell, comprise poisonous and/or environmentally unacceptable gaseous compounds, such as Volatile Organic Compounds (or VOC) that will be released from the waste into the atmosphere. Liquids, either being a part of the waste, or water caused by rain, draining through the landfill, will solubilise solid compounds in the landfill, and will leak from the landfill, to pollute both surface water in streams, lakes, and may penetrate into the ground water

To avoid filling up all available space with landfills and to avoid the other problems associated therewith, plants for sorting of the waste have been built. Recyclable materials are separated from non-recyclable waste. The recyclable material is sent to plants to recover valuable materials, and recycle the materials, such metals. The non-recyclable materials may be separated into combustible materials and non-combustible materials. The non-combustible materials are sent to landfills or the like, whereas combustible materials are introduced into an incineration plant. In the incineration plant the combustible material is combusted at high temperature to destroy all temperature degradable or combustible material, including poisonous and environmentally unwanted compounds. Additionally, different means are included to avoid emission of hazardous gases from the incineration plant.

By the combustion the volume of the solid waste is reduced by from 50 to 90% dependent on the composition of the waste, and the combustion technology. The heat of combustion is often used for district heating and/or cooling.

Technology for sorting waste is well known. Normally, the waste is sorted based on their physical properties, such as magnetic properties, density, surface to weight, etc.

Incineration plants are also well known, and a large number of such plants are in operation.

WO 01/68789 relates to a method and system for decomposition of moist fuel or other carbonaceous materials wherein dried carbonaceous material is introduced into a pyrolysis reactor where the material is heated by introduction of superheated steam to cause pyrolysis. The pyrolysis gas is further degraded by partial oxidation before the partly oxidised pyrolysis gas is introduced into a gasification unit together with solid material from the pyrolysis reactor for further gasification of the solids. The resulting gas may be introduced into a combustion unit, such as a combustion engine that according to one embodiment is a gas turbine.

EP 2 322 781 A1 relates to an integrated coal gasification combined cycle power generation plant, where CO₂ is captured from the exhaust gas after combustion and before the combustion gas is expanded over an gas turbine. A part of the CO₂ may be recycled as a carrier gas in the coal gasification part of the plant.

EP 1160307 A (KUNSTSTOFF- UND UMWELTSTECHNIK GMBH) 05.12.2001 relates to a method and plant for thermal treatment and chemical conversion of natural and synthetic compounds from waste to form a gas for further use. The composition of the product gas is not well defined, but the product gas seems to comprise a mixture of lower hydrocarbons , CO₂, CO, and hydrogen. Lower hydrocarbons are in the present description used mainly to encompass hydrocarbons that are gases at ambient temperatures, such as methane, ethane, propane and butane. It is indicated that the product gas is used a gas operated engine or turbine. It is; however, clear that the gas composition from the device according to EP1160307 will vary as a function of the actual composition of the waste introduced into the device. Such variations make the gas unsuitable for a modern high efficient gas turbine, but are acceptable for gas operated engines that are far less efficient than a modern gas turbine. No other potential uses are indicated for the product gas.

The present invention is based on EP1160307 in that it uses the core technology described therein for pyrolysis and thermolysis of organic compounds. The present invention is directed to improvements allowing to obtain a product gas having a predetermined composition, mainly comprising hydrogen, CO, CO₂ and lower hydrocarbons adjusted to fit the intended use, and having a composition, or a WOBBE index (Wobbe index= calorific value / (gas specific gravity)⁻²), that is substantially constant over time.

Especially when the intended use for the produced gas is as fuel for a gas turbine, it is important to ascertain a constant gas composition or a constant WOBBE index fulfilling the requirements of a modern efficient gas turbine, i.e. that the fluctuations in the WOBBE index is less than 2% over a period of 10 minutes. The composition of the produced gas having high hydrogen content, resulting a high temperature flame, makes it especially important to keep the WOBBE index substantially constant.

### Summary of invention

According to a first aspect, the present invention relates to a method for thermal treatment and chemical transformation of waste comprising natural and synthetic carbonaceous materials for generation of a fuel gas for further use, where the carbonaceous material is introduced into a thermolysis and pyrolysis reactor (40), in which the materials are thermally treated in the presence of water to produce a raw pyrolysis and thermolysis gas and a carbonaceous solid rest, characterised i n that the humidity of the waste is adjusted to 10 to 25 % by weight before introduction into the thermolysis an pyrolysis reactor,
that the raw thermolysis and pyrolysis gas is introduced into a first gas cleaning unit (62) where the gas is separated into a cleaned gas fraction, and a first light oil fraction having a boiling point from about 170-350 °C, that the first light oil fraction is introduced into cracking unit (80), wherein the first light oil fraction is thermally cracked and separated into a synthesis gas mainly comprising hydrogen, CO and CO₂ which is introduced into the first gas washing section (62), and not cracked hydrocarbons that are reintroduced into the thermolysis and pyrolysis reactor (40), and a cleaned raw gas fraction, wherein the cleaned raw gas fraction is introduced into a first separation unit (65) in which the gas is separated into a hydrogen enriched fraction which is introduced into a second scrubbing unit (75), a hydrocarbon rich fraction rich in C₁₊ hydrocarbons, which is used for heating purposes, and a third gas fraction mainly comprising methane, CO and CO₂, which is introduced into a conversion unit (70) together with the solid rest from the thermolysis and pyrolysis reactor (40) and steam to cause gasification and further conversion to increase the output of hydrogen, where the remaining solid fraction from the conversion unit is withdrawn for export, and the gas phase is introduced into the second scrubbing unit (75) for separation of gas into a fuel gas stream and a second light oils stream having a boiling point of about 100 to 200 °C.

The post-treatment of the pyrolysis gas produced in the reactor, and the conversion in the conversion unit, are necessary to obtain a sufficient amount of fuel gas having a sufficiently high calorific value to be useful for intended purposes, such as to be used as a fuel gas for a gas turbine.

According to one embodiment, the fuel gas stream is introduced into a CO₂ capture unit to separate at least parts of the CO₂ from the produced fuel gas. By separating at least a part of the CO₂ from the fuel gas, the calorific value, or WOBBE index, of the produced fuel gas is increased. Additionally, capturing of CO₂ results in a reduction of the CO₂ emission from the plant, and capture of CO₂ that can be deposited safely or used as pressure support in oil and gas fields. The rate of CO₂ capture may also be adjusted to allow for adjustment of the WOBBE index to avoid unwanted fluctuation in the WOBBE index.

The method as described above, wherein the incoming waste is fractioned into fractions having different calorific value, and wherein the fractions are remixed in ratios giving a waste input into the thermolysis and pyrolysis reactor that has a substantially stable calorific value. Adjustment of the incoming waste to be treated is an additional way of adjusting the WOBBE index of the resulting gas.

According to one embodiment, the incoming waste is autoclaved before being fractioned. During the process of autoclaving, the waste undergoes different processes that removes the odour from the waste, that reduces the volume of the waste and that makes the sorting process easier, as the different components in the waste gets more separated from each other.

According to a second aspect, the present invention relates to a plant for thermal treatment and chemical transformation of waste comprising natural and synthetic carbonaceous materials, the plant comprising a waste inlet, a thermolysis and pyrolysis reactor for thermal treatment of the waste to produce a pyrolysis gas and a solid rest, wherein the plant further comprises
a humidity control unit for adjusting the humidity of the waste to 10 - 25 % by weight,
a pre-treated waste line for transporting pre-treated waste from the humidity control unit to the thermolysis and pyrolysis reactor,
a gas withdrawal line for withdrawal of gas generated in the thermolysis and pyrolysis reactor and introduction of the gas into a first gas cleaning unit for separation of the pyrolysis gas into a first light oils fraction having a boiling point of 170-350 °C, and a cleaned gas fraction mainly comprising hydrogen, CO and CO₂,
a first cracker line for withdrawing the first light gas fraction from the first gas cleaning unit and introducing the gas into a cracking unit for thermal cracking, and for separating the cracked gas into a synthesis gas mainly comprising hydrogen, CO and CO₂, and not cracked hydrocarbons,
a light oils line for withdrawing the not cracked hydrocarbons form the cracker and introducing thereof into the thermolysis and pyrolysis reactor, a first separation unit for separation of the scrubbed gas fraction into a heating gas fraction, a hydrogen enriched gas fraction and a raw gas fraction,
a conversion unit connected to a steam line for introduction of steam into the conversion unit, for further conversion of the raw gas fraction and gasification of the solid rest from the thermolysis and pyrolysis reactor to produce additional gas,
a second gas purification unit for separation of the hydrogen rich stream from the first membrane separation unit and the additional gas from the conversion unit to give a second light oils fraction, and a fuel gas fraction.

According to one embodiment, the plant further comprises a second separation unit for capturing at least a part of the CO₂ present in fuel gas.

According to still another embodiment, the plant further comprising a waste sorting unit for sorting of the incoming waste into fraction having different calorific value, and additionally facilities to remix fractions of the waste to keep a substantially stable calorific value of the input to the thermolysis and pyrolysis reactor.

The plant may additionally comprise an autoclave system for autoclaving the waste before introduction into the sorting unit.

According to one embodiment, the first separation unit is a membrane separation unit. A preferred first separation unit comprises two membranes.

According to yet an embodiment, the second separation unit is a membrane separation unit.

For both the first and second separation units, membrane separation units are preferred, as membrane based separation units for these purposes are known to have relatively low cost, they are reliable, and have low running costs.

### Brief description of drawings

Figure 1 is a flow diagram for a waste handling plant according to the invention,
Figure 2 is a flow diagram illustrating the present invention in further detail than figure 1,
Figure 3 is a principle drawing of a reactor to be used in the present invention, and
Figure 4 is a principle drawing of a waste sorting system that may be used in the present invention.

### Description of embodiments

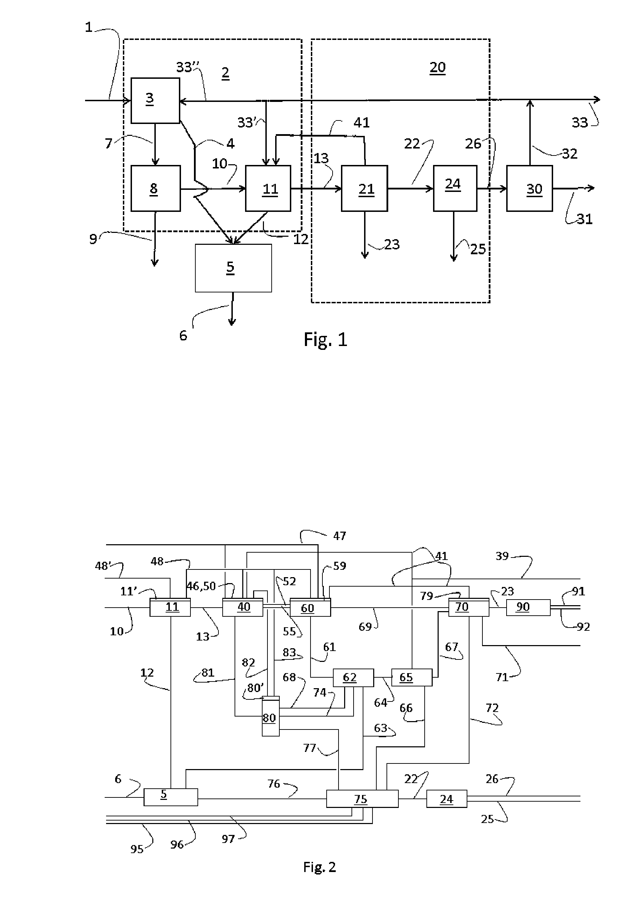

Figure 1 is an overview illustration of an embodiment of the present invention, where incoming is introduced via a waste line 1, into a waste pre-treatment section 2.

The pre-treatment section of the illustrated embodiment comprises an autoclave system 3, into which the MSW in line 1 is first introduced. Autoclaves suitable for the purpose are delivered i.a. by AeroThermal Group, UK. The autoclave system preferably comprises a series of parallel arranged rotating autoclaves wherein the MSW is treated batch wise. During normal operation the autoclaves will be in different parts of an autoclave cycle, giving a semi-continuous operation.

The autoclave cycle comprises the following steps: Filling MSW into the autoclave, and thereafter closing the autoclave. Closing and then evacuating the autoclave to remove most of the air from the inside of the autoclave. Introduction of steam into the autoclave to heat the autoclave and its content to about 160° C typical at about 5,2 barg (bar gauge). Keeping the temperature and pressure for a predetermined period, such as e.g. 30 -40 minutes. The autoclaves are rotated during this process.

During the autoclaving process, the MSW in the autoclave is sanitized, and the volume is typically reduced by about 60%. The heat treatment kills all the bacteria and other degrading life in the MSW, and thus removes the odour of the waste. Plastics, such as PE and PET, reach their glass-rubber transition stage and are reduced through deformation. Plastic films are mostly unaffected by the autoclaving but are cleaned during the process cycle. Grass cuttings and small yard waste are reduced to cellulose fibres. Additionally, lignin and other macromolecules are broken down, and/or coagulated. The autoclaving process thus reduces bonds between parts of the MSW and makes the further processing easier

After finalization of the heat treatment, the autoclave is vented and the steam therein is introduced to a condenser, where the steam is condensed to give water. The water is withdrawn through a waste water line 4 and is introduced into a waste water treatment unit 5 treated before being released or re-used, to avoid pollution to the surroundings or to avoid accumulation of pollutants in water circulating in the plant. Treated waste water is withdrawn through a treated water line 6 to be released, further treated or re-used.

The autoclave is then again filled to restart the autoclave cycle. To obtain a semi-continuous process, the cycles of the autoclaves in parallel, are controlled so that they are out of phase which each other.

The autoclaved MSW is thereafter taken out of the autoclaves 3 through autoclaved waste lines 7 and introduced into a sorting system 8 comprising a set of conveyors and sorting devices, separating the autoclaved MSW into different fractions. The sorting system is preferably a state of the art sorting system for separating the incoming MSW in a plurality of fractions, such as plants marketed and delivered by Stadler Anlagenbau GmbH, Germany.

In such a sorting plant the MSW is sorted into fractions such as:
- PET (polyethylene terephthalate)
- HDPE (high density poly ethylene)
- Mixed plastics, that may be sorted in individual fractions
- Films
- Tetrapacks
- Mixed paper
- SRF (solid recovered fuel)
- Non-ferrous metals
- Ferrous metals
- Residues (non-combustible solid residue)

Plastics rich in nitrogen or chlorine are unwanted in most of the potential uses for the fuel produced according to the invention. Nylon, which primarily is contained in carpets, contains nitrogen, and result in formation of NOx in a plant for combustion, whereas PVC produces HCl, which is strongly acidic in combination with water. Additionally, both nylon and PVC may be sold as valuable products for recirculation. Separation of nylon and PVC from the remaining plastics may be performed by means of computer operated wind sifting in combination with near infra red detection, as further described below. A minor amount of Nylon and/or PVC are, however, acceptable as a contamination to the different fractions. PVC may by be used, provided that the weight of PVC amounts to less than 1 % by weight of the total MSW.

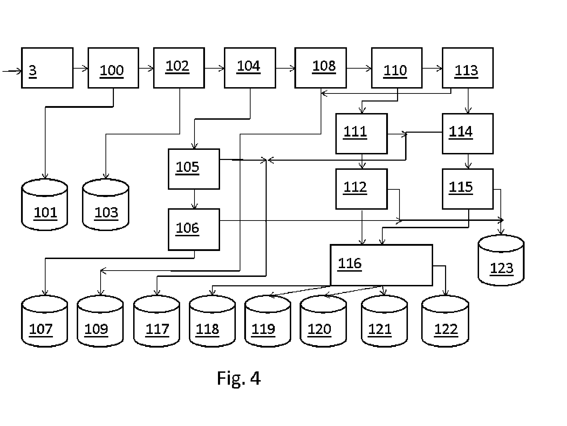

Figure 4 illustrates a typical flow diagram for a sorting plant. The waste enters the plant, as above described, through the waste line 1 and is introduced into the autoclave 3. The autoclaved waste is withdrawn from the autoclave 3 and introduced via line 7 into a first magnetic separator 100 which catches big ferrous pieces, that are present in the autoclaved waste material, and removes it from the remaining waste, into a first iron fraction 101.

After leaving the first magnetic separator, the waste is further sorted in a first screen 102, such as a finger screen, dimensioned to remove large items, such as items having a size >200 mm and stringy materials like wrapping foils, textile and rope, by allowing particle of <200 mm through the screen. The >200 mm fraction is collected in a large high calorific value fraction 103. The skilled person will understand that what is regarded as a large item in such a plant is dependent on the actual plant and that the given limit of 200 mm may differ from plant to plant. If deemed necessary, a sorting unit comprising a near infrared detection system may be arranged to remove any nylon and/or PVC from said fraction.

The <200 mm material passing through the first screen 102, is thereafter screened in a second screen 104, such as a Starscreen®, to give a <12 mm fraction, and a +12 mm fraction. The <12 mm fraction is introduced into a magnetic drum over belt separator 106, to separate a iron containing waste fraction that is combined with other iron containing fractions as will be described below. The non-ferrous fraction not being removed in the separator 106, is introduced into a non-ferrous separator 106, where the components are separated based on their density to give a non-ferrous heavy fraction that is combined with other non-ferrous heavy fractions as described in more details below. The lighter material is collected in a flock / fibre fraction 107.

The +12 mm fraction is introduced into a first wind sifting separator 108, where most of the less dense material is separated from the denser material by means of blowing air and gravity. Light materials, mostly comprising plastics in addition to some additional light materials are led into a light materials fraction 109. The light material fraction may be further sorted to separate different plastic and / or to separate plastic from non-plastic material.

The dense fraction from the first wind sifting separator 108 is introduced into a screening unit 110 separating material according to size, i.e. <50 mm and >50 mm. The <50 mm material is introduced into a magnetic drum over belt separator 111, to separate a ferrous fraction that is handled as described below, and a non-ferrous fraction that is introduced into a non-ferrous separator, separating the dense material, typically metals, from less denser materials. The dense material is collected as described below, whereas the less dense material is introduces into a near infrared detection separator section 116 as will be described below.

The >50 mm material from the screening unit 110, is introduced into a second wind sifting separator 113. The less dense material from the second wind sifting separator 113 is combined with the less dense material from the first wind sifting separator 108, as described above. The dense material from the second wind sifting separator 113 is introduced into a magnetic drum over belt separator 114, to give a ferrous fraction that is combined with the ferrous material from the separators 105 and 111as described above, and introduced into a ferrous fraction 117.

The non-ferrous fraction from separator 114 is introduced into a non-ferrous separator 115, corresponding to separators 106 and 112, to give a dense fraction that is combined with the corresponding fractions from separators 106 and 112 and collected as a non-ferrous fraction 123.

The near infrared separator section 116 typically comprises several corresponding separators, optionally with a ferrous separator for a final separation of ferrous materials from the remaining waste. The infrared separators, e.g. four separators, are all corresponding separators that are adjusted for separation of different types of plastic materials. The skilled person understands how to adjust the detectors for separation of the different plastic types, based on their chemical composition that is detectable using near infrared detectors.

The near infrared separator section 116 may, if it comprises four infrared separators as indicated below, will be able to separate the introduced material into fractions as PCV in a fraction 118, nylon in a fraction 119, PET in to a fraction 120, mixed plastics into a fraction 121, a high calorific end product fraction 122, and optionally an additionally not shown metal fraction.

Recyclable materials such as the ferrous fraction 101, 117, the non-ferrous fraction 123, the PVC fraction 118 and nylon fraction 119, are exported from the plant. The PVC fraction 118 may, however, be used internally for fuel gas generation, provided that the PVC amounts to less than about 1 % by weight of the total sorted MSW added. Even other fractions, such as the PET fraction 120 may be exported if all PET is not needed for the gas production.

Non-recyclable and combustible waste fractions are withdrawn from the sorting plant, even though the export lines are not illustrated in figure 4. The non-recyclables are introduced into a humidity adjustment unit 11 via a non-recyclables line 10.

The skilled person understands that the size limits given for the fractions above are examples, and that the size limits may differ substantially depending on the supplier of the plant and the concrete plans for a new plant. The number of fractions and the sequence of the different sorting processes may also differ. Additionally, fractions that are not sufficiently homogenous after sorting, may be recycled to an earlier sorting step.

A normal MSW has normally a humidity of about 20 to 30 % by weight. After autoclaving the humidity has normally increased to about 50 % by weight. The humidity required for further treatment in normally from about 10 to 25 % by weight, such as from 15 to 20 % by weight, e.g. about 18 % by weight. Accordingly, the humidity of the waste normally has to be dried. If the waste is too dry, water and/ or steam are added to humidify the waste. Any excess water is removed from the humidity controlling unit 11 through excess water line 12 and introduced into the waste water treatment unit 5, as described above. Alternatively, water and/ or steam may be added through not shown line(s).

Drying of the MSW may be obtained by blowing air through the MSW, or by heating the MSW, or a combination thereof. Heat for drying of the non-recyclables in the humidity adjustment unit 11, may come from hot water / steam generated in a later described gas turbine power plant 30, and/or by firing of combustible gas produced later gas producing units, in a combustion chamber arranged for heating of the material to be dried.

The skilled person will understand that the described pre-treatment section 2 is a presently preferred pre-treatment section and that any pre-treatment unit that can produce a sorted and fractionated waste may replace the described unit without leaving the scope of the invention. Alternative pre-treatment sections may be shredder type waste treatment plants, etc.

From the humidity adjustment unit 11, the sorted and humidity adjusted waste is withdrawn through a pre-treated waste line 13 to be introduced into a gas production and treatment section 20. The pre-treated waste is via the pre-treated waste line 13 introduced into a pyrolysis and thermolysis unit 21, for production of a synthesis gas, mainly comprising hydrogen, CO and CO₂, that is withdrawn through a fuel gas line 22 for the intended use, and a solid rest, mostly comprising carbon, that is withdrawn in line 23, that is exported from the plant for further use or deposition. The pyrolysis and thermolysis unit 21 will be further described below.

The skilled person will understand that if the waste is too dry, water and/or steam may be introduced into waste when the waste is feed into the reactor 21 in addition to or in lieu of adding water and/ or steam in a separate humidity adjustment unit.

The synthesis gas withdrawn from in line 22 may be used as it is, or be introduced into an optional separation unit 24, for separation, or capturing of CO₂ from the synthesis gas. In the second separation unit, the incoming synthesis gas is separated, to produce a CO₂ stream that is withdrawn through a CO₂ export line 25, and a low CO2 synthesis gas, that is withdrawn through a low CO2 fuel gas line 26. The second separation unit 21 may be of any well known type, such as an absorption / desorption unit, pressure swing unit, or a membrane based unit. The presently preferred CO₂ capture unit is a membrane based unit, due to its low running costs. Such solutions are commercially available.

CO₂ from the CO₂ capture unit and exported through a CO₂ export line 25 may be sent to a carbon storage facility to store the CO₂ in a depleted oil or gas well, or in an aquifer in a well known way, or be sold for use for pressure support in enhance oil recovery. Alternatively, the captured CO₂ or parts thereof, may be used for agricultural or aquaculture purposes, and be introduced into greenhouses or plants for algae production as a source of carbon.

The gas produced in the thermolysis and pyrolysis unit 21 have many potential uses. In the illustrated embodiment, the gas is introduced into a gas turbine after being passed through the CO2 capture unit 24. The gas may, optionally, be sent for its final use, such as e.g. a gas turbine, without CO2 capture, depending on the intended use. For most purposes, the CO2 present in the gas in line 22 is an inert gas that reduces the calorific value of the gas, and increases the volume of the gas. Both from such a technical viewpoint, and from an environmental viewpoint, it is therefore an advantage to capture CO2, before using or selling the produced gas. By capturing CO2, the CO2 footprint of the plant is substantially reduced.

In the illustrated embodiment, the produced gas leaving the gas production and treatment unit 20 in line 26, is introduced into a gas turbine plant 30, to produce electrical power that may be used for internal processes requiring electrical power, and where the surplus electric energy may be sold to the electric grid through an electric power line 31.

Steam produced in the gas turbine plant 30, is withdrawn through a steam line 32, to deliver hot water and/or steam to heat requiring processes in the plant, such as the autoclaves, 3, and drying in the humidity adjusting unit 11 via internal steam lines 33', 33".. The skilled person will also be able to identify other possible internal consumers of the heat energy in the hot water or steam. Excess heat in form of steam and/or hot water may be exported from the plant for e.g. district heating through steam export line 33.

According to an alternative embodiment, the gas turbine 30 is substituted with a Fischer-Tropch (FT) plant, for conversion of the synthesis gas to synthetic hydrocarbons in a well known way.

The skilled person will understand that the present gas production and treatment unit 20 may be used for other hydrocarbon rich materials than mSW, such as e.g. more homogenous waste materials as waste plastic materials such as agricultural plastic waste, or tyres. Such materials have humidity that is too low for efficient thermolysis and pyrolysis in unit 21. Water may be added to such types of waste in the humidity adjustment unit 11 and/or be added into the thermolysis and pyrolysis unit 21 through a not shown water introduction line, to give a water content in unit 21 of about 20 % by weight of the introduced waste.

The solids withdrawn from the thermolysis and pyrolysis unit 21 through line 22, may differ in composition and potential use based on the incoming waste. One potential use for the solid rest, withdrawn through line 22, is for soil improvement, by spreading the material on farmland.

Figure 2 is an illustration of the gas production and treatment unit 20, but includes also the humidity controlling unit 11.

Waste is introduced into the humidity controlling unit 11, here illustrated as a drying unit, through waste line 10 as described above. Heat for drying the waste in the humidity controlling unit 11 may supplied to a heating chamber 11', as steam through line 33' , or as hot flue gas in flue gas line 48 from sources that will be further explained below. After being cooled while heating and drying the waste, the cooled exhaust is released through an exhaust gas release line 48'.

From the humidity controlling unit 11, the waste is introduced into a primary reactor 40 via a humidified waste line 13 , and introduced into a primary reactor 40, e.g. of the kind described in the above indentified EP1160307. The skilled person will understand that the illustrated reactor 40 may be one reactor or two or more reactors arranged in parallel. The same applies to all elements described below.

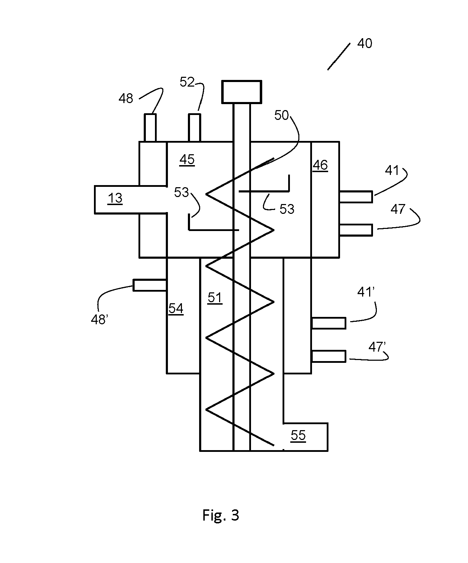

Fig. 3 illustrates the reactor 40 in further detail. Waste from the humidity control unit 11 is introduced through line 13 into a mixing chamber 45 surrounded by a heating jacket 46 heated by combustion of heating gas introduced through a heating gas line 41 and air that is introduced through an air line 47. Exhaust gas from the combustion is withdrawn through an exhaust release line 48.

A screw conveyor 50, operated by means of a motor 49, is arranged in the mixing chamber 45, the screw conveyor extending 50 into a high temperature chamber 51. Mixing arms 53 are preferably connected to the axis of the screw conveyor, for mixing of the incoming waste with waste already partly processed in the mixing chamber.

The waste mixture in the mixing chamber is transported into the high temperature chamber 51 by means of the screw conveyor 50. In the high temperature chamber 51 the waste is further heated by means of combustion of heating gas in heating jacket 54, surrounding the high temperature chamber 51. Heating gas is introduced into the heating jacket 54 through a gas line 41', and air for the combustion is introduced through an air line 47'. A gas line 41' is provided to add natural gas into line 41 during start-up of the plant.

The total waste in the mixing chamber 45 and high temperature chamber 51 is thus heated in absence of oxygen to effect thermolysis and pyrolysis therein. The waste in the mixing chamber is heated both by the heating jacket 46 and pyrolysis and thermolysis gases generated in the mixing chamber and the high temperature chamber. At least a part of the gases generated through pyrolysis and thermolysis in the mixing chamber and high temperature chamber is withdrawn through a pyrolysis gas line 52 connected to the mixing chamber. The temperature in the mixing chamber is typically from 500 to 700°C, whereas the temperature in the high temperature chamber is higher due to the additional heating, such as typically about 1000°C. The pressure in the reactor 40 is typically about ambient pressure or slightly higher.

Due to the thermolysis and pyrolysis in the reactor 40, a substantial part of the original mass of the waste is converted to gas by well known thermolysis or pyrolysis reactions. Small and large organic molecules such as synthetic or natural polymers or macromolecules, such as carbohydrates, fats, proteins, plastics etc., are thermally cracked, i.e. molecules are split via different reactions to form smaller molecules. The humidity present in the waste, and/or water / steam added into the waste during introduction into the mixing chamber results in some steam cracking reactions to happen in the reactor as well as heat cracking. Due to the presence of water in the reactor 40, several reactions take place therein. First of all, the temperature causes thermolysis or pyrolysis of the hydrocarbon material introduced into the reactor, to give a solid char rest and gases, primarily hydrogen, methane, minor amount of lower hydrocarbons and tars, or higher hydrocarbons that will condensate at lower temperatures. Additionally, the water present in the reaction mixture in the reactor 40, will react with carbon according to the reactions:
(1) C + H₂O → CO + H₂ (gasification reaction)
(2) CO + H₂O → CO₂ + H₂ (water gas shift reaction)

As mentioned above, a part of the generated gas may be withdrawn through line 52, as will be described in further detail below. The remaining mass of solid waste is withdrawn from the bottom part of the high temperature chamber 51 through a high temperature chamber outlet 55 and are directly introduced into a series of secondary reactors 60, here illustrated by one reactor 60. The gas withdrawn trough line 52 is introduced into the first secondary reactor 60, to participate in the further breakdown of hydrocarbons in the secondary reactor 60.

The secondary reactor(s) 60 have a common design being tubular reactor(s), provided with a screw conveyor both for mixing the solid material and the gas, and for carrying the remaining solid material through the reactor(s). Additionally, the reactors are provided a heating jacket 59 heated by combustion as for the primary reactor 40, for further pyrolysis and thermolysis of the remaining solid waste, and to ascertain that generated gas is released from the solid waste therein. The temperature in the secondary reactors is upheld at about the same temperature as in the high temperature chamber. Dependent on the specific plant, two or more secondary reactors 60 may be serially connected to provide maximum thermolysis and pyrolysis of the waste. The solid rest from the last secondary reactor 60 is withdrawn through a solids line 69 and is introduced into a conversion unit 70.

Gases generated and/or released from the solid carbonized waste, are withdrawn from the secondary reactors 60 through a raw gas withdrawal line 61, and are introduced into a first gas cleaning unit 62. The first gas cleaning unit 62 is provided for removal of tars, oils and dust particles from the raw gas stream. The first cleaning unit 62 comprises a series of scrubbers where the gas is washed in a buffered liquid medium. The first cleaning unit may be of the kind described in DE 1316351 A2 (DR. ANDREAS UNGER) 04.06.2003 The temperature of the raw gas is reduced in stages, from one scrubber to the next, to separate the condensate, and solid particles from the gas. The temperature, pH and composition of the scrubbing media are controlled in a conventional way.

Waste water from the scrubbers is removed from the first gas cleaning unit 62 through a waste water line 63 and is introduced into the above mentioned waste water treatment unit 5.

Cleaned raw gas is removed from the first gas cleaning unit 62 via a scrubbed raw gas line 64 and introduced into a gas separation unit 65 comprising two membrane based separation units, one membrane unit to give a hydrogen enriched gas fraction that is withdrawn through a hydrogen rich gas line 66, and one membrane unit to give a hydrocarbon rich fraction that is withdrawn through a heat gas line 41, to be used for firing for heat purposes as described above and a third raw gas fraction comprising a mixture of gases, mainly lower hydrocarbons, CO, CO₂, and some hydrogen, that is withdrawn through a gas line 67. The gas in line 67 is introduced into the above mentioned conversion unit 70.

The solids introduced into the conversion unit 70 in line 69, are heated by combustion of heat gas in a heating jacket 69 and is reacted with the gas introduced through line 67, and steam introduced through a steam line 71 to further break down hydrocarbons in the gas, and for gasification of carbon in the solids, according to the "gasification" reaction:
H₂O + C → CO + H₂ to add additional synthesis gas to the generated gas flow. Dependent on the amount of steam introduced through the steam line 71, the generated CO may be further converted to CO₂ and hydrogen, by the reaction CO + H₂O → CO₂ + H₂.

The conversion in the conversion unit 70 does, however, result in a higher concentration of hydrogen in the product gas, at the cost of gas used for heating the conversion unit 70.

Gas generated in the conversion unit 70 is withdrawn through a converted gas line 72, and is introduced into a second gas cleaning unit 75, were the gas the gas is combined with the gas in the above described hydrogen rich gas line 66, and is scrubbed in a series of scrubbers, where the calcium hydroxide or sulphuric acid, and/or other chemicals, such as Ca(OH)₂, and sulphuric acid, used for removal of unwanted elements in the gas, may be included in the scrubbing solution. Water for scrubbing, and aqueous solutions of scrubbing chemicals are added through supply lines 95, 96 and 97, respectively. Used scrubbing solution is removed through a used water line 76 and introduced into the waste water unit 5.

The solid waste from the converter 70 is withdrawn through a solids waste line 23 and is optionally introduced into a char handling unit 90, where the solid material is separated into char, that is withdrawn through a char line 91, and a mixture of char and ash that is withdrawn through an ash line 92. The char and ash are exported for the plant, and sold / deposed.

Light oils, having a boiling point above from about 170 - 350 °C are withdrawn from the first gas cleaning unit 62 via a first cracker line 68 and is introduced into a cracking unit 80. Additionally light oils having a boiling point from about 100 - 200 °C are withdrawn from the second gas cleaning unit 75 and are introduced into the cracking unit 80 via a second cracker line 77.

In the cracking unit 80, the hydrocarbons are thermally cracked by heating the cracking unit with exhaust gas from the heating collars 46, 55 from the primary reactor 40 that is withdrawn through an exhaust gas line 82 and introduced into a heating collar 78 surrounding the cracking unit 80. The spent exhaust gas from the heating collar 78 is returned into the above described exhaust line 48 through an exhaust gas return line 83.

Synthesis gas, i.e. mainly hydrogen, CO and CO₂ generated in the cracking in the cracker 80 are withdrawn through a cracked gas line 74 and introduced into the first gas washing section 62. Hydrocarbons that are not cracked in the cracker is withdrawn via a light oils line 81, introduced into the primary reactor and mixed with the waste mixture therein to be further degraded together with the incoming waste in the primary reactor 40 and the further process in the secondary reactors 60.

Raw fuell gas is withdrawn through the synthesis gas line 22 and is introduced into a CO2 separation unit 24, as described above.

Table 1 below gives typical values for kind of matter, mass flow, temperature and pressure in different lines in an exemplary waste handling plant according to the present invention for handling of MSW, where the resulting gas is intended for a gas turbine for generation of electric power and district heating and / or cooling.

**Table 1**

| Material in the flow | Line No. | Mass (kg/h) | Temp (°) | Pressure (mbar) |
|---|---|---|---|---|
| Incoming MSW | 10 | 14000 | 20 | - |
| Dried MSW | 13 | 13200 | 100 | - |
| CO₂ / fuel gas | 22 | 7600 | 800 | 50 |
| CO₂ | 25 | 3300 | | |
| Fuel gas | 26 | 4300 | | |
| Raw gas | 61 | 12800 | 800 | 50 |
| Heating gas | 41 | 3800 | | |
| Char | 91 | 1400 | | |
| Ash / char | 92 | 1400 | | |

It can inter alia be seen from the table, that the total mass is reduced by about 80% by weight. The amount of solids is i.a. dependent on the conversion in the conversion unit 70, as the weight of the carbonaceous rest may be substantially reduced by conversion of carbon by the gasification reaction mentioned above. In addition to this substantial reduction of weight, and correspondingly, volume, the solid material exported from the plant has valuable properties making it possible to sell the product at the marketplace. The solid waste may be used in agriculture for soil improvement, and / or find use in different industrial applications. If there is no marked for the solid waste, it may be safely deposed, which is not the case for the MSW before treatment.

The input waste in line 10 may vary over time. To give a stable composition or WOBBE index, and stable amount of gas produced, the process may be controlled by controlling the temperature in the reactor 40 and the secondary reactor(s). The WOBBE index may also be adjusted by adjusting the amount of steam introduced into the conversion unit 70 in line 71, and the removal of CO₂ in the separation unit 24. CO₂ is here an inert gas that reduces the WOBBE index / calorific value. Reducing the amount of CO₂ in the fuel gas will substantially increase the WOBBE index.

The present invention is described with reference to a specific plant and a specific embodiment. The skilled person will know how to adjust the parameters, dependent on the incoming waste, to obtain a fuel gas in line 26 that is suitable for other uses than for a gas turbine according to the state of the art. The fuel gas in line 26 comprises a mixture of CO, hydrogen, CO₂, and lower hydrocarbons, such as methane, ethane, propane and butane. The produced fuel gas may be further separated to give individual fractions of one, two or more of the gases in the mixture. The gasification and thermolysis unit may also be operated at a higher temperature, and/ or by introduction of more steam to cause more steam reforming to shift the products further against hydrogen and CO₂.

It is assumed that gas turbines that can accept relatively pure hydrogen as fuel will be available within a few years. The skilled person will know how to adjust the parameters in different parts of the plant to obtain a produced gas in line 26 that mainly comprises hydrogen at the expense of CO, which has a far lower calorific value than hydrogen.

Correspondingly, the skilled person will understand how to adjust the parameters of operation of the plant if the intended use for the fuel gas produced is to produce other products from the fuel gas, instead of generating electrical power and hot water for district heating and/or cooling. The plant will then be adjusted to produce a fuel gas mixture that is optimal for the intended purpose, such as fuel gas for a Fischer Tropsch plant for synthesis of higher hydrocarbons.

### Reference signs list

- 1.: Waste line
- 2.: Waste pre-treatment section
- 3.: Autoclave system
- 4.: Waste water line
- 5.: Waste water treatment unit
- 6.: Treated waste water line
- 7.: Autoclaved waste line
- 8.: Sorting system
- 9.: Recyclables line
- 10.: Non-recyclables line
- 11.: Humidity control unit
- 12.: Excess water line
- 13.: Pre-treated waste line
- 14. 15. 16. 17. 18. 19. 20.: Gas production and treatment unit
- 21.: Thermolysis unit
- 22.: Fuel gas line
- 23.: Solids waste line
- 24.: CO₂ capture unit
- 25.: CO₂ export line
- 26.: Low CO2 fuel gas line
- 27. 28. 29. 30.: Gas turbine power plant
- 31.: Electrical power line
- 32.: Steam line
- 33.: Steam export line
- 34. 35. 36. 37. 38. 39.: Startup gas line
- 40.: reactor
- 41.: heating gas line
- 42. 43. 44. 45.: Mixing chamber
- 46.: Heating jacket
- 47.: Air line
- 48.: Exhaust release line
- 49.: Motor
- 50.: Screw conveyor
- 51.: High temperature chamber
- 52.: Pyrolysis gas line
- 53.: Mixing arm
- 54.: Heating jacket
- 55.: High temperature chamber outlet
- 56. 57. 58. 59.: Heating jacket
- 60.: Secondary reactor
- 61.: Raw gas withdrawal line
- 62.: First gas cleaning unit
- 63.: Waste water line
- 64.: Scrubbed raw gas line
- 65.: Gas separation unit
- 66.: Hydrogen rich gas line
- 67.: Gas line
- 68.: First cracker line
- 69.: Solids line
- 70.: Conversion unit
- 71.: Steam line
- 72.: Converted gas line
- 73. 74.: Cracked gas line
- 75.: Second gas cleaning unit
- 76.: Used water line
- 77.: Second cracker line
- 78.: Heating jacket
- 79.: Heating jacket
- 80.: Cracker
- 81.: Light oils line
- 82.: Exhaust gas line
- 83.: Exhaust gas return line
- 84. 85. 86. 87. 88. 89. 90.: Char handling unit
- 91.: Char line
- 92.: Ash line
- 93. 94. 95.: Supply line
- 96.: Supply line
- 97.: Supply line
- 98. 99. 100.: First magnetic separator
- 101.: First iron fraction
- 102.: First screen
- 103.: Large high calorific value fraction
- 104.: Second screen
- 105.: Magnetic drum over belt separator
- 106.: Non ferrous separator
- 107.: Flock / fibre fraction
- 108.: First wind sifting separator
- 109. 110.: Screening unit
- 111.: Magnetic drum over belt separator
- 112.: Non-ferrous separator
- 113.: Second wind sifting separator
- 114.: Magnetic drum over belt separator
- 115.: Non-ferrous separator
- 116.: Near infrared separating section
- 117.: Ferrous fraction
- 118.: PVC fraction
- 119.: Nylon fraction
- 120.: PET fraction
- 121.: Mixed plastics fraction
- 122.: High calorific end product fraction
- 123.: Non-ferrous fraction

### References

- EP 1160307 A (KUNSTSTOFF- UND UMWELTSTECHNIK GMBH) 05.12.2001
- DE 1316351 A (DR. ANDREAS UNGER) 04.06.2003

## Claims

1. A method for thermal treatment and chemical transformation of waste comprising natural and synthetic carbonaceous materials for generation of a fuel gas for further use, where the carbonaceous material is introduced into a thermolysis and pyrolysis reactor (40), in which the materials are thermally treated in the presence of water to produce a raw pyrolysis and thermolysis gas and a carbonaceous solid rest, **characterised in that** the humidity of the waste is adjusted to 10 to 25 % by weight before introduction into the thermolysis an pyrolysis reactor,
that the raw thermolysis and pyrolysis gas is introduced into a first gas cleaning unit (62) where the gas is separated into a cleaned gas fraction, and a first light oil fraction having a boiling point from 170-350 °C,
that the first light oil fraction is introduced into cracking unit (80), wherein the first light oil fraction is thermally cracked and separated into a synthesis gas mainly comprising hydrogen, CO and CO₂ which is introduced into the first gas washing section (62), and not cracked hydrocarbons that are reintroduced into the thermolysis and pyrolysis reactor (40), and a cleaned raw gas fraction, wherein the cleaned raw gas fraction is introduced into a first separation unit (65) in which the gas is separated into a hydrogen enriched fraction which is introduced into a second scrubbing unit (75), a hydrocarbon rich fraction rich in C₁₊ hydrocarbons, which is used for heating purposes, and a third gas fraction mainly comprising methane, CO and CO₂, which is introduced into a conversion unit (70) together with the solid rest from the thermolysis and pyrolysis reactor (40) and steam to cause gasification and further conversion to increase the output of hydrogen, where the remaining solid fraction from the conversion unit is withdrawn for export, and the gas phase is introduced into the second scrubbing unit (75) for separation of gas into a fuel gas stream and a second light oils stream having a boiling point of 100 to 200 °C.

2. The method of claim 1, wherein the fuel gas stream is introduced into a CO₂ capture unit to separate at least parts of the CO₂ from the produced fuel gas.

3. The method of any of the preceding claims, wherein the incoming waste is fractioned into fractions having different calorific value, and wherein the fractions are remixed in ratios giving a waste input into the thermolysis and pyrolysis reactor that has a substantially stable calorific value.

4. The method of claim 3, wherein the incoming waste is autoclaved before being fractioned.

5. A method according to any of the preceding claims, wherein the method additionally comprises introduction of the produced fuel gas into a gas turbine power plant for production of electrical power.

6. A plant for thermal treatment and chemical transformation of waste comprising natural and synthetic carbonaceous materials, the plant comprising a waste inlet (1), a thermolysis and pyrolysis reactor (40) for thermal treatment of the waste to produce a pyrolysis gas and a solid rest, **characterised i n** that the plant further comprises
a humidity control unit (11) for adjusting the humidity of the waste to 10 - 25 % by weight,
a pre-treated waste line (13) for transporting pre-treated waste from the humidity control unit (11) to the thermolysis and pyrolysis reactor (40),
a gas withdrawal line (61) for withdrawal of gas generated in the thermolysis and pyrolysis reactor (40) and introduction of the gas into a first gas cleaning unit (62) for separation of the pyrolysis gas into a first light oils fraction having a boiling point of 170-350 °C, and a scrubbed gas fraction mainly comprising hydrogen, CO and CO₂,
a first cracker line (68) for withdrawing the first light oils fraction from the first gas cleaning unit (62) and introducing the oils into a cracking unit (80) for thermal cracking, and for separating the cracked gas into a synthesis gas mainly comprising hydrogen, CO and CO₂, and not cracked hydrocarbons, ,
a light oils line (81) for withdrawing the not cracked hydrocarbons, from the cracker and introducing thereof into the thermolysis and pyrolysis reactor (40),
a first separation unit (65) for separation of the scrubbed gas fraction into a heating gas fraction, a hydrogen enriched gas fraction and a raw gas fraction,
a conversion unit (70) connected to a steam line (71) for introduction of steam into the conversion unit, for further conversion of the raw gas fraction and gasification of the solid rest from the thermolysis and pyrolysis reactor (40) to produce additional gas,
a second gas purification unit (75) for separation of the hydrogen rich stream from the first separation unit (65) and the additional gas from the conversion unit (70) to give a second light oils fraction, and a fuel gas fraction.

7. The plant according to claim 6, wherein the plant further comprises a second separation unit (24) for capturing at least a part of the CO₂ present in fuel gas.

8. The plant according to claim 6 or 7, further comprising a waste sorting unit (3) for sorting of the incoming waste into fraction having different calorific value, and additionally facilities to remix fractions of the waste to keep a substantially stable calorific value of the input to the thermolysis and pyrolysis reactor (40).

9. The plant according to claim 8, wherein the plant additionally comprises an autoclave system (3) for autoclaving the waste before introduction into the sorting unit (3).

10. The plant of any of the claims 6 to 9, wherein the plant additionally comprises a gas turbine (30) fired by the fuel gas, for generation of electrical power.

11. The plant according to any of the claims 6 to 10, wherein the first separation unit (65) is a membrane separation unit.

12. The plant according to claim 11, wherein the first separation unit comprises two membranes.

13. The plant according to any of the claims 6-12, wherein the second separation unit is a membrane separation unit.

## Patentansprüche

1. Verfahren zur thermischen Behandlung und chemischen Umwandlung von Abfall, umfassend natürliche und synthetische kohlenstoffhaltige Materialien zur Erzeugung von Brenngas zur Weiternutzung, wobei das kohlenstoffhaltige Material einem Thermolyse- und Pyrolyse-Reaktor (40) zugeführt wird, in welchem die Materialien thermisch in Gegenwart von Wasser behandelt werden, um ein Pyrolyse- und Thermolyse-Rohgas und einen kohlenstoffhaltigen festen Rest zu erzeugen, **dadurch gekennzeichnet, dass** die Feuchtigkeit des Abfalls auf 10 bis 25 Gew.% vor dem Zuführen zum Thermolyse- und Pyrolyse-Reaktor einge-stellt wird,
dass das Thermolyse- und Pyrolyse-Rohgas einer ersten Gasreinigungseinheit (62) zugeführt wird, wo das Gas in eine gereinigte Gasfraktion und eine erste Leichtölfraktion mit einem Siedepunkt von 170-350 °C getrennt wird,
dass die erste Leichtölfraktion einer Crackingeinheit (80) zugeführt wird, wo die erste Leichtölfraktion thermisch gecrackt wird und in ein Synthesegas, welches hauptsächlich Wasserstoff, CO und CO₂ umfasst, welches dem ersten Gaswaschabschnitt (62) zugeführt wird, und in nicht gecrackte Kohlenwasserstoffe, die dem Thermolyse- und Pyrolyse-Reaktor (40) wieder zugeführt werden, und in eine gereinigte Rohgasfraktion getrennt wird, wobei die gereinigte Rohgasfraktion einer ersten Trenneinheit (65) zugeführt wird, in welcher das Gas in eine wasserstoffreiche Fraktion, welche einer zweiten Wascheinheit (75) zugeführt wird, eine wasserstoffreiche Fraktion an C₁₊ Kohlenwasserstoffen, welche zu Heizzwecken verwendet wird, und eine dritte Gasfraktion getrennt wird, welche hauptsächlich Methan, CO und CO₂ umfasst, welche einer Konversionseinheit (70) zusammen mit dem festen Rest aus dem Thermolyse- und Pyrolyse-Reaktor (40) und Dampf zugeführt wird, um eine Vergasung und eine weitere Umwandlung zu verursachen, um die Wasserstoffausgabe zu erhöhen, wobei die verbleibende Feststofffraktion aus der Umwandlungseinheit zur Entnahme entnommen wird, und die Gasphase der zweiten Wascheinheit (75) zugeführt wird, um das Gas in einen Brenngasstrom und einen zweiten Leichtölstrom mit einem Siedepunkt von 100 bis 200 °C zu trennen.

2. Verfahren nach Anspruch 1, wobei der Brenngasstrom zum Trennen zumindest von Teilen des CO₂ aus dem hergestellten Brenngas einer CO₂-Auffangeinheit zugeführt wird.

3. Verfahren nach einem der vorhergehenden Ansprüche, wobei der hereinkommende Abfall in Fraktionen mit verschiedenen Brennwerten fraktioniert wird, und wobei die Fraktionen in Verhältnissen zusammengemischt werden, um eine Abfalleingabe in den Thermolyse- und Pyrolyse-Reaktor zu ergeben, welche einen im Wesentlichen stabilen Brennwert aufweist.

4. Verfahren nach Anspruch 3, wobei der hereinkommende Abfall vor dem Fraktionieren autoklaviert wird.

5. Verfahren nach einem der vorhergehenden Ansprüche, wobei das Verfahren weiterhin das Zuführen des erzeugten Brenngases in ein Gas-Turbinen-Kraftwerk zur Erzeugung von elektrischer Energie umfasst.

6. Anlage zur thermischen Behandlung und chemischen Umwandlung von Abfall, umfassend natürliche und synthetische kohlenstoffhaltige Materialien, wobei die Anlage einen Abfalleinlass (1), einen Thermolyse- und Pyrolyse-Reaktor (40) zur thermischen Behandlung des Abfalls umfasst, um ein Pyrolysegas und einen festen Rest herzustellen, **dadurch gekennzeichnet, dass** die Anlage weiterhin umfasst:
eine Feuchtigkeitssteuereinheit (11) zum Einstellen der Feuchtigkeit des Abfalls auf 10 - 25 Gew.%,
eine vorbehandelter Abfall-Line (13) zum Transportieren von vorbehandeltem Abfall von der Feuchtigkeitssteuereinheit (11) zum Thermolyse- und Pyrolyse-Reaktor (40),
eine Gasentnahmeleitung (61) zum Entnehmen von im Thermolyse- und Pyrolyse-Reaktor (40) erzeugten Gas und Zuführen des Gases zu einer ersten Gasreinigungseinheit (62) zum Trennen des Pyrolysegases in eine erste Leichtölfraktion mit einem Siedepunkt von 170-350 °C und eine gewaschene Gasfraktion, welche hauptsächlich Wasserstoff, CO und CO₂ enthält,
eine erste Crackingleitung (68) zum Entnehmen der ersten Leichtölfraktion aus der ersten Gasreinigungseinheit (62) und zum Zuführen des Öls in eine Crackingeinheit (80) zum thermischen Cracken und zum Trennen des gecrackten Gases in ein synthetisches Gas, welches hauptsächlich Wasserstoff, CO und CO₂ umfasst, und
im nicht-gecrackte Kohlenwasserstoffe,
eine Leichtölleitung (81) zum Entnehmen der nicht-gecrackten Kohlenwasserstoffe vom Cracker und Zuführen dieser zum Thermolyse- und Pyrolyse-Reaktor (40),
eine erste Trenneinheit (65) zum Trennen der gereinigten Gasfraktion in eine Heizgasfraktion, eine wasserstoffangereicherte Gasfraktion und eine Rohgasfraktion,
eine Umwandlungseinheit (70), welche mit einer Dampfleitung (71) zum Zuführen des Dampfs zur Umwandlungseinheit verbunden ist, zur weiteren Umwandlung der Rohgasfraktion und zur Vergasung des festen Rests aus dem Thermolyseund Pyrolyse-Reaktor (40), um zusätzliches Gas herzustellen,
eine zweite Gasreinigungseinheit (75) zum Trennen eines wasserstoffreichen Stroms aus der ersten Trenneinheit (65) und des zusätzliches Gases aus der Umwandlungseinheit (70), um eine zweite Leichtölfraktion und eine Brenngasfraktion zu ergeben.

7. Anlage nach Anspruch 6, wobei die Anlage weiterhin eine zweite Trenneinheit (24) zum Auffangen von zumindest einem Teil des im Brenngas vorhandenen CO₂ umfasst.

8. Anlage nach Anspruch 6 oder 7, weiterhin umfassend eine Abfallsortiereinheit (3) zum Sortieren eines zugeführten Abfalls in Fraktionen mit verschiedenem Brennwert, und zusätzliche Einrichtungen zum Vermischen von Fraktionen des Abfalls, um im Wesentlichen einen stabilen Brennwert der Eingabe in den Thermolyse- und Pyrolyse-Reaktor (40) beizubehalten.

9. Anlage nach Anspruch 8, wobei die Anlage zusätzlich ein Autoklaviersystem (3) zum Autoklavieren des Abfalls vor dem Zuführen zur Sortiereinheit (3) umfasst.

10. Anlage nach einem der Ansprüche 6 bis 9, wobei die Anlage zusätzlich eine Gasturbine (30) zum Erzeugen von elektrischer Energie umfasst, welche durch das Brenngas geheizt wird.

11. Anlage nach einem der Ansprüche 6 bis 10, wobei die erste Trenneinheit (65) eine Membran-Trenneinheit ist.

12. Anlage nach Anspruch 11, wobei die erste Trenneinheit zwei Membranen umfasst.

13. Anlage nach einem der Ansprüche 6-12, wobei die zweite Trenneinheit eine Membran-Trenneinheit ist.

## Revendications

1. Procédé pour le traitement thermique et la transformation chimique de déchets comprenant des matières carbonées synthétiques et naturelles pour la génération d'un gaz combustible en vue d'une utilisation ultérieure, où la matière carbonée est introduite dans un réacteur à thermolyse et à pyrolyse (40), dans lequel les matières sont thermiquement traitées en présence d'eau afin de produire un gaz de pyrolyse et de thermolyse brut et un reste solide carboné, **caractérisé en ce que** l'humidité des déchets est ajustée sur 10 à 25 % en poids avant introduction dans le réacteur à thermolyse et à pyrolyse,
**en ce que** le gaz de pyrolyse et de thermolyse brut est introduit dans une première unité de nettoyage de gaz (62) où le gaz est séparé en une fraction de gaz nettoyé et en une première fraction d'huile légère ayant un point d'ébullition de 170-350 °C,
**en ce que** la première fraction d'huile légère est introduite dans une unité de craquage (80), dans laquelle la première fraction d'huile légère est thermiquement craquée et séparée en un gaz de synthèse comprenant principalement de l'hydrogène, du CO et du CO₂ qui est introduit dans la première section de lavage de gaz (62) et en hydrocarbures non craqués qui sont réintroduits dans le réacteur à thermolyse et à pyrolyse (40), et une fraction de gaz brut nettoyé, dans lequel la fraction de gaz brut nettoyé est introduite dans une première unité de séparation (65) dans laquelle le gaz est séparé en une fraction enrichie en hydrogène qui est introduite dans une deuxième unité de purification (75), en une fraction riche en hydrocarbures riche en hydrocarbures C₁₊, qui est utilisée à des fins de chauffage, et en une troisième fraction de gaz comprenant principalement du méthane, du Co et du CO₂, qui est introduite dans une unité de conversion (70) avec le reste solide depuis le réacteur à thermolyse et à pyrolyse (40) et de la vapeur pour provoquer une gazéification et une autre conversion afin d'augmenter la sortie d'hydrogène, où la fraction solide restante provenant de l'unité de conversion est retirée pour exportation et la phase gazeuse est introduite dans la deuxième unité de purification (75) pour séparation du gaz en un flux de gaz combustible et en un deuxième flux d'huiles légères ayant un point d'ébullition de 100 à 200 °C.

2. Procédé selon la revendication 1, dans lequel le flux de gaz combustible est introduit dans une unité de capture de CO₂ pour séparer au moins des parties du CO₂ du gaz combustible produit.

3. Procédé selon l'une quelconque des revendications précédentes, dans lequel les déchets entrants sont fractionnés en fractions ayant une valeur calorifique différente, et dans lequel les fractions sont remélangées selon des rapports donnant une entrée de déchets dans le réacteur à thermolyse et à pyrolyse qui a une valeur calorifique sensiblement stable.

4. Procédé selon la revendication 3, dans lequel les déchets entrants sont traités par autoclave avant d'être fractionnés.

5. Procédé selon l'une quelconque des revendications précédentes, dans lequel le procédé comprend en plus l'introduction du gaz combustible produit dans une installation de turbine à gaz pour la production d'énergie électrique.

6. Installation pour le traitement thermique et la transformation chimique de déchets comprenant des matières carbonées synthétiques et naturelles, l'installation comprenant une entrée (1) de déchets, un réacteur à thermolyse et à pyrolyse (40) pour le traitement thermique des déchets afin de produire un gaz pyrolyse et un reste solide, **caractérisée en ce que** l'installation comprend en outre
une unité de régulation d'humidité (11) pour ajuster l'humidité des déchets sur 10-25 % en poids,
une conduite de déchets prétraités (13) pour transporter les déchets prétraités depuis l'unité de régulation d'humidité (11) jusqu'au réacteur à thermolyse et à pyrolyse (40),
une conduite d'extraction de gaz (61) pour l'extraction de gaz généré dans le réacteur à thermolyse et à pyrolyse (40) et l'introduction du gaz dans une première unité de nettoyage de gaz (62) pour la séparation du gaz pyrolyse en une première fraction d'huiles légères ayant un point d'ébullition de 170-350 °C, et en une fraction de gaz purifié comprenant principalement de l'hydrogène, du CO et du CO₂,
une première conduite de dispositif de craquage (68) pour extraire la première fraction d'huiles légères de la première unité de nettoyage de gaz (62) et introduire les huiles dans une unité de craquage (80) pour un craquage thermique, et pour séparer le gaz craqué en un gaz de synthèse comprenant principalement de l'hydrogène, du CO et du CO₂, et en hydrocarbures non craqués,
une conduite d'huiles légères (81) pour extraire les hydrocarbures non craqués du dispositif de craquage et les introduire dans le réacteur à thermolyse et à pyrolyse (40),
une première unité de séparation (65) pour la séparation de la fraction de gaz purifié en une fraction de gaz de chauffage, en une fraction de gaz enrichi en hydrogène et en une fraction de gaz brut,
une unité de conversion (70) reliée à une conduite de vapeur (71) pour l'introduction de vapeur dans l'unité de conversion, pour une autre conversion de la fraction de gaz brut et une gazéification du reste solide provenant du réacteur à thermolyse et à pyrolyse (40) afin de produire du gaz supplémentaire,
une deuxième unité de purification de gaz (75) pour la séparation de la vapeur riche en hydrogène provenant de la première unité de séparation (65) et du gaz supplémentaire provenant de l'unité de conversion (70) pour donner une deuxième fraction d'huiles légères et une fraction de gaz combustible.

7. Installation selon la revendication 6, dans laquelle l'installation comprend en outre une deuxième unité de séparation (24) pour capturer au moins une partie du CO₂ présent dans le gaz combustible.

8. Installation selon la revendication 6 ou 7, comprenant en outre une unité de tri de déchets (3) pour le tri des déchets entrants en fraction ayant une valeur calorifique différente et en plus des équipements pour remélanger les fractions des déchets afin de garder une valeur calorifique sensiblement stable de l'entrée dans le réacteur à thermolyse et à pyrolyse (40).

9. Installation selon la revendication 8, dans laquelle l'installation comprend en plus un système d'autoclave (3) pour traiter par autoclave les déchets avant introduction dans l'unité de tri (3).

10. Installation selon l'une quelconque des revendications 6 à 9, dans laquelle l'installation comprend en plus une turbine à gaz (30) déclenchée par le gaz combustible, pour génération d'énergie électrique.

11. Installation selon l'une quelconque des revendications 6 à 10, dans laquelle la première unité de séparation (65) est une unité de séparation à membrane.

12. Installation selon la revendication 11, dans laquelle la première unité de séparation comprend deux membranes.

13. Installation selon l'une quelconque des revendications 6-12, dans laquelle la deuxième unité de séparation est une unité de séparation à membrane.
